# EUROPÄISCHE PATENTSCHRIFT

(11) **EP 1 399 985 B1**
(45) Veröffentlichungstag und Bekanntmachung des Hinweises auf die Patenterteilung: **29.10.2008**
(21) Anmeldenummer: 01990407.7
(22) Anmeldetag: 13.11.2001
(51) Int. Cl.: H01M 8/24, H01M 8/02, H01M 4/86, H01M 8/10

(54) **ZELLENANORDNUNG FÜR EINEN ELEKTRONISCHEN ENERGIEWANDLER UND VERFAHREN ZUR HERSTELLUNG EINER SOLCHEN**
CELL ASSEMBLY FOR AN ELECTROCHEMICAL ENERGY CONVERTER AND METHOD FOR PRODUCING SUCH A CELL ASSEMBLY
ENSEMBLE DE PILES POUR CONVERTISSEUR D'ENERGIE ELECTROCHIMIQUE ET PROCEDE DE FABRICATION DUDIT ENSEMBLE

(30) Priorität: 15.11.2000 DE 10056535
(43) Veröffentlichungstag der Anmeldung: 24.03.2004
(73) Patentinhaber: CFC Solutions GmbH, 85521 Ottobrunn (DE)
(72) Erfinder: STEINFORT, Marc, 85737 Ismaning (DE); BEDNARZ, Marc, 82024 Taufkirchen (DE)
(74) Vertreter: Winter, Josef
(86) Internationale Anmeldenummer: PCT/EP2001/013088
(87) Internationale Veröffentlichungsnummer: WO 2002/041435

(56) Entgegenhaltungen:
- EP-A- 0 104 892
- EP-A- 0 329 161
- EP-A- 0 817 297
- EP-A- 0 996 185
- WO-A-00/08703
- FR-A- 2 506 080
- PATENT ABSTRACTS OF JAPAN vol. 011, no. 275 (E-537), 5. September 1987 (1987-09-05) & JP 62 076261 A (TOSHIBA CORP), 8. April 1987 (1987-04-08)

## Beschreibung

Die Erfindung betrifft eine Brennstoffzellenanordnung nach dem Oberbegriff des Anspruchs 1, sowie ein Verfahren zur Herstellung einer solchen.

Es sind Brennstoffzellenanordnungen, insbesondere Anordnungen von Schmelzkarbonatbrennstoffzellen bekannt, bei denen eine Anzahl von Brennstoffzellen, die jeweils eine Anode, eine Kathode und eine zwischen diesen angeordnete poröse Elektrolytmatrix enthalten, in Form eines Brennstoffzellenstapels angeordnet sind. Hierbei sind die einzelnen Brennstoffzellen durch Bipolarplatten voneinander getrennt und elektrisch kontaktiert, und es sind jeweils an den Anoden Stromkollektoren zum elektrischen Kontaktieren derselben und zum Führen von Brenngas an denselben vorgesehen, ebenso wie an den Kathoden Stromkollektoren zum elektrischen Kontaktieren derselben und zum Führen von Kathodengas an denselben vorgesehen sind. Weiterhin sind Mittel vorgesehen, um das Brenngas und das Kathodengas zu den Brennstoffzellen zuzuführen und von diesen abzuführen.

Bekannte Brennstoffzellenanordnungen dieser Art sind in der Herstellung verhältnismäßig aufwendig und damit kostspielig, da sie eine Vielzahl von einzelnen Komponenten enthalten, welche zum Teil in einer großen Anzahl von Fertigungsschritten hergestellt werden müssen.

Aus der WO 00/08703 A1 geht es als bekannt hervor, bei einer Schmelzkarbonatbrennstoffzelle für den Stromkollektor, der zugleich als Elektrodenträger ausgebildet ist, ein poröses Schaummaterial mit einem Feststoffgehalt von 3% bis 85% zu verwenden. Die Poren des als ebene Platte ausgebildeten Schaummaterials stellen innere Kanäle zur Gasleitung dar. Der poröse Elektrodenträger kann ein Katalysatormaterial beinhalten, das zur direkten internen Reformierung des Kraftstoffs innerhalb der Brennstoffzelle dient.

In der WO 98/35398 werden Gaskanäle durch Pressen in einen Metallschaum eingebracht, der als Stromkollektor für eine Brennstoffzelle mit einem Feststoffelektrolyten dient. Die durch Pressen eingebrachten Kanäle liegen außerhalb des Ersteckungsbereiches von Anode und Kathode. Die Gaskanäle im Ersteckungsbereich der Elektoden sind konventionell in eine auf der Porenstruktur anliegenden Trennplatte eingeprägt.

Die Aufgabe der Erfindung ist es, eine Zellenanordnung für einen elektrochemischen Energiewandler anzugeben, welche mit geringerem Aufwand rationell herstellbar ist. Weiterhin soll ein Verfahren zur Herstellung einer solchen Zellenanordnung angegeben werden.

Diese Aufgabe wird durch die im Anspruch 1 angegebene Zellenanordnung gelöst. Weiterhin wird die Aufgabe gelöst durch ein Verfahren zur Herstellung einer Zellenanordnung nach dem Anspruch 13.

Durch die Erfindung wird eine Zellenanordnung mit in Form eines Zellenstapels angeordneten Zellen geschaffen, wobei die Zellen jeweils eine Anode, eine Kathode und eine zwischen diesen angeordnete ionenleitende Schicht aufweisen und durch Bipolarplatten voneinander getrennt und elektrisch kontaktiert sind. Jeweils an den Anoden sind Stromkollektoren zum elektrischen Kontaktieren derselben und zum Führen von Anodenmedium an denselben vorgesehen und an den Kathoden sind Stromkollektoren zum elektrischen Kontaktieren derselben und zum Führen von Kathodenmedium an denselben vorgesehen. Weiterhin sind Mittel vorgesehen, um Anoden- und Kathodenmedium zu den Zellen zuzuführen und von diesen abzuführen. Die Stromkollektoren von Anode und/oder Kathode sind durch eine diese tragende poröse Struktur gebildet, in welcher Poren als Strömungswege zum Führen von Anoden- und/oder Kathodenmedium ausgebildet sind, wobei die poröse Struktur aus einem Schaum mit einem Feststoffgehalt von 4% bis 35% besteht. In die gesinterte poröse Struktur sind durch Prägen, Walzen oder Pressen Kanäle als weitere Strömungswege (17) eingebracht und die das Brenngas und / oder Kathodengas führenden Strömungswege (17) sind an der der jeweiligen Elektrode (1,2) abgewandten Oberfläche der die Stromkollektoren (4a, 4b) bildenden porösen Struktur vorgesehen. Der Vorteil hiervon ist es, dass solchermaßen ausgebildete Stromkollektoren sehr viel einfacher und mit weniger Herstellungsschritten herstellbar sind als Stromkollektoren, wie sie herkömmlicher Weise bei Zellenanordnungen diese Art verwendet werden.

Vorteilhafterweise besteht die die Stromkollektoren bildende poröse Struktur aus einem porösen Nickel-Sintermaterial.

Vorteilhafterweise besteht die die Stromkollektoren bildende poröse Struktur aus einem Nickel-Schaum-Material.

Die Oberfläche der porösen Struktur ist abgesehen von den in die Oberfläche eingebrachten Strömungswegen vorzugsweise eben.

Gemäß einer besonders vorteilhaften Weiterbildung der erfindungsgemäßen Zellenanordnung ist es vorgesehen, dass die Anode und/oder die Kathode als Schicht auf der die Stromkollektoren bildenden porösen Struktur vorgesehen sind. Dies führt zu einer weiteren Vereinfachung der Herstellung.

Gemäß einer anderen bevorzugten Weiterbildung der erfindungsgemäßen Zellenanordnung enthalten die Bipolarplatten zwischen den Stromkollektoren benachbarter Zellen angeordnete ebene Bipolarbleche. Dies führt zu einer weiteren Vereinfachung und Verringerung des Herstellungsaufwandes der Zellenanordnung.

Gemäß einer anderen sehr vorteilhaften Weiterbildung der erfindungsgemäßen Zellenanordnung ist es vorgesehen, dass die ionenleitende Schicht als Schicht auf einer von Anode oder Kathode ausgebildet ist. Dies führt zu einer weiteren Vereinfachung der Zellenanordnung und damit des Herstellungsaufwandes.

Gemäß einer anderen vorteilhaften Weiterbildung der erfindungsgemäßen Zellenanordnung ist auf der die Anode tragenden, den Stromkollektor bildenden porösen Struktur eine Schicht eines Katalysatormaterials vorgesehen. Hierdurch kann die Katalysatorvorrichtung auf einfache Weise innerhalb der Zellenanordnung vorgesehen werden.

Gemäß einer bevorzugten Ausführungsform der Erfindung ist es vorgesehen, dass die durch Anode oder Kathode und den diese tragende Stromkollektor gebildete Halbzelle seitlich durch ein Dichtungselement, insbesondere in Form eines U-förmigen Profils abgedichtet ist, welches um die Anode oder Kathode und die den Stromkollektor bildende poröse Struktur herumgeführt ist.

Hierbei ist es vorzugsweise vorgesehen, dass an der Oberfläche von Anode bzw. Kathode und des diese tragenden Stromkollektors ein der Materialstärke des Dichtungselements entsprechender Absatz ausgebildet ist, so dass die Oberfläche von Anode bzw. Kathode und Stromkollektor durch die Oberfläche des Dichtungselements glatt fortgesetzt wird.

Von besonderem Vorteil ist es, wenn der Zellenstapel im Betrieb vertikal oder horizontal angeordnet ist und die Vorspannkraft der Zellen gering und an den Betriebszustand der Zellenanordnung variabel anpassbar ist. Insbesondere bei horizontaler Anordnung des Zellenstapels sind alle Zellen in demselben der gleichen Vorspannung ausgesetzt und diese auf einen geringen Wert einstellbar, so dass an die für die Komponenten der Zellen verwendeten Materialien geringere Anforderungen in Bezug auf deren Druckfestigkeit gestellt werden müssen. Eine horizontale Anordnung ist besonders bei geringer Dichte der porösen Struktur der Stromkollektoren geeignet. Bei vertikaler Anordnung des Zellenstapels sind wegen der höheren Gewichtsbelastung der untersten Zellen höhere Dichten der porösen Strukturen zu wählen.

Vorzugsweise ist es vorgesehen, dass die Vorspannkraft erzeugende Mittel beim Anfahren der Zellenanordnung eine hohe Vorspannkraft erzeugen und anschließend die Vorspannkraft reduzieren. Der Vorteil hiervon ist es, dass beim Anfahren der Zellenanordnung sich die einzelnen Komponenten setzen können und Herstellungstoleranzen ausgeglichen werden, während danach beim Betrieb der Zellenanordnung eine reduzierte Vorspannkraft zu einer höheren Lebensdauer der Zellen führt. Vorzugsweise wird die Vorspannkraft so geregelt, dass die Druckkräfte im Stapel nach dem Anfahren konstant bleiben.

Das erfindungsgemäße Verfahren zum Herstellen einer Zellenanordnung der vorher genannten Art sieht es vor, dass die Stromkollektoren als poröse Struktur aus einem Sintermaterial, insbesondere aus einem porösen Nickel-Sintermaterial hergestellt werden, dass die weiteren Strömungswege an der der jeweiligen Elektrode abgewandten Oberfläche der die Stromkollektoren bildenden Struktur durch Prägen, Walzen oder Pressen eingebracht werden, und dass die Elektroden als Schicht auf die Stromkollektoren aufgebracht werden.

Der Vorteil dieses Verfahrens ist es, dass die Zellenanordnung einfach und mit geringem Aufwand und damit kostengünstig herstellbar ist.

Vorzugsweise wird die die Stromkollektoren bildende poröse Struktur aus einem Nickel-Schaum-Material durch ein Karbonyl-Verfahren, Abscheiden, Galvanisieren oder Aufschäumen hergestellt.

Gemäß einer bevorzugten Ausführungsform des erfindungsgemäßen Verfahrens ist es vorgesehen, dass die die Elektroden bildende Schicht direkt durch Sprühen eines sprühfähigen Elektrodenrohmaterials auf die die Stromkollektoren bildende poröse Struktur oder benachbarte Komponenten aufgebracht werden.

Alternativ dazu kann die die Elektroden bildende Schicht durch Rakeln eines zähflüssigen oder pastösen Elektrodenrohmaterials auf die die Stromkollektoren bildende poröse Struktur oder benachbarte Komponenten aufgebracht werden.

Gemäß einer anderen Alternative kann die die Elektroden bildende Schicht durch Gießen, Foliengießen oder Tauchen eines flüssigen Elektrodenmaterials auf die die Stromkollektoren bildende poröse Struktur oder benachbarte Komponenten aufgebracht werden.

Eine weitere Alternative schließlich sieht es vor, dass die die Elektroden bildende Schicht zunächst getrennt hergestellt und dann auf die die Stromkollektoren bildende poröse Struktur aufgebracht wird.

Gemäß einer Weiterbildung des erfindungsgemäßen Verfahrens ist es vorgesehen, dass auf die die Anode tragende, den Stromkollektor derselben bildende poröse Struktur ein Katalysatormaterial aufgebracht wird. Der Vorteil hiervon ist eine einfache und kostensparende Herstellung eines Katalysators zur internen Reformierung des Brenngases.

Das Katalysatormaterial kann vorzugsweise in Form einer Schicht durch Sprühen aufgebracht werden.

Gemäß einer anderen sehr vorteilhaften Weiterbildung des erfindungsgemäßen Verfahrens ist es vorgesehen, dass die ionenleitende Schicht durch Aufbringen einer Schicht eines flüssigen, zähflüssigen, pastösen oder plastischen Materials auf die die Anoden oder Kathoden bildende Schicht hergestellt wird. Dies ermöglicht eine weitere Vereinfachung und Kostensenkung der Herstellung der Zellenanordnung.

Vorzugsweise kann die Matrix durch Sprühen, Rakeln, Gießen, Foliengießen oder Tauchen hergestellt werden.

Gemäß einer Alternative kann die Matrix als Schicht eines ionenleitenden Materials zunächst getrennt hergestellt und dann auf die die Anoden oder Kathoden bildende Schicht aufgebracht werden.

Gemäß einer Weiterbildung des erfindungsgemäßen Verfahrens ist es vorgesehen, dass die Matrix in Form einer Doppelschichtmatrix aus zwei Schichten hergestellt wird.

Vorzugsweise wird die Matrix auf die die Kathoden bildende Schicht aufgebracht.

Im folgenden werden Ausführungsbeispiele der erfindungsgemäßen Zellenanordnung und des erfindungsgemäßen Verfahrens zur Herstellung einer solchen anhand der Zeichnung für eine Brennstoffzellenanordnung erläutert. Es zeigen:
Figur 1 eine schematisierte Schnittdarstellung einer Brennstoffzelle gemäß einem Ausführungsbeispiel der Erfindung;
Figur 2 in einer schematisierten vergrößerten Querschnittsansicht einen Ausschnitt einer einen Stromkollektor bildenden porösen Struktur mit einer darauf angeordneten Elektrode gemäß einem Ausführungsbeispiel der Erfindung;
Figur 3 in einem kleineren Maßstab eine perspektivische Ansicht der den Stromkollektor bildenden porösen Struktur von Figur 2;
Figur 4a) und b) in vergrößerter Darstellung und teilweise perspektivisch eine Querschnittsdarstellung einer Brennstoffhalbzelle mit einem durch die poröse Struktur gebildeten Stromkollektor und der von diesem getragenen Elektrode zusammen mit einem Dichtungselement zur seitlichen Abdichtung dieser Halbzelle gemäß einem weiteren Ausführungsbeispiel der Erfindung;
Figur 5 eine perspektivische Darstellung der in Figur 4 gezeigten Halbzelle zusammen mit einem Separatorblech gemäß einem Ausführungsbeispiel der Erfindung;
Figur 6 eine schematisierte Darstellung, welche die horizontale Anordnung des Brennstoffzellenstapels gemäß einem Aspekt der Erfindung zeigt;
Figuren 7, 8 und 9 schematisierte, teilweise perspektivische Darstellungen von Verfahrensschritten zur Herstellung einer Elektrode einer auf der den Stromkollektor bildenden porösen Struktur gemäß Ausführungsbeispielen der Erfindung;
Figur 10 eine schematisierte Darstellung, welche die Herstellung der Elektrolytmatrix gemäß einem weiteren Ausführungsbeispiel der Erfindung zeigt;
Figur 11 eine schematisierte Darstellung, welche die Herstellung einer Katalysatorbeschichtung auf der den Stromkollektor bildenden porösen Struktur gemäß einem weiteren Ausführungsbeispiel der Erfindung zeigt;
Figur 12 eine Querschnittsdarstellung, welche die Herstellung von Gasführungskanälen gemäß einem weiteren Ausführungsbeispiel der Erfindung zeigt; und
Figur 13 eine Querschnittsdarstellung einer Zelle mit zweilagigen Stromkollektoren.

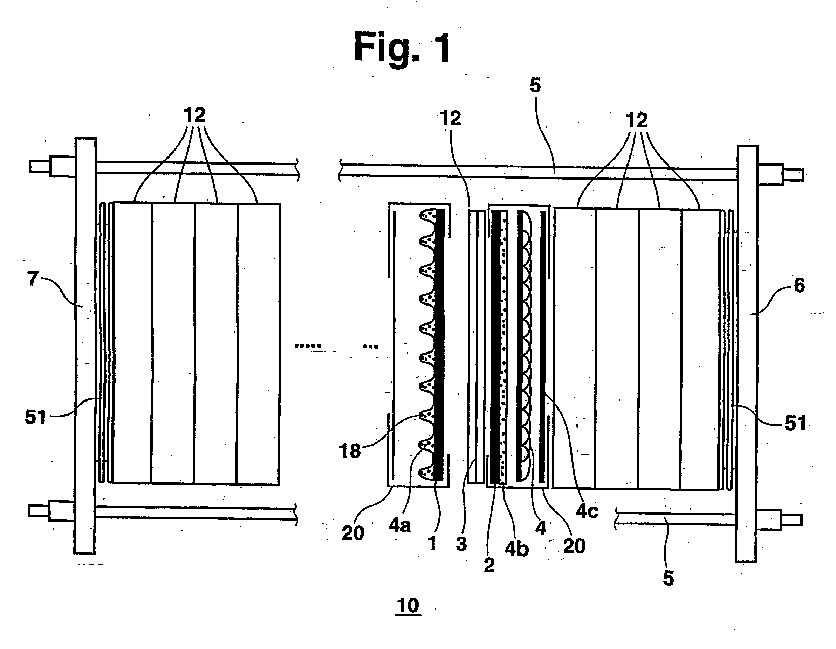

In Figur 1 bedeutet das Bezugszeichen 10 insgesamt einen Brennstoffzellenstapel, der aus einer Anzahl von Brennstoffzellen 12 besteht. Diese enthalten jeweils eine Anode 1, eine Kathode 2 und eine dazwischen angeordnete Elektrolytmatrix 3. Benachbarte Brennstoffzellen 12 sind durch Bipolarplatten 4 voneinander getrennt, welche dazu dienen, die Ströme eines Brenngases B und eines Oxidationsgases O voneinander getrennt über die Anode 1 bzw. über die Kathode 2 der Brennstoffzellen 12 zu führen. Dabei sind die Anode 1 und die Kathode 2 benachbarter Brennstoffzellen 12 durch die Bipolarplatten 4 gastechnisch voneinander getrennt, jedoch über jeweilige Stromkollektoren 4a, 4b elektrisch kontaktiert, nämlich einen Stromkollektor 4a an der Anode 1 und einen Stromkollektor 4b der Kathode 2. Der Brennstoffzellenstapel 10 wird in seiner Längsrichtung durch Zugstangen 5 unter eine Vorspannung gesetzt, welche zwischen Endplatten 6, 7 eingespannt sind. Die Vorspannung ist z. B. auch durch Federbälge 51 und Federn induzierbar und einstellbar.

Ganz allgemein sind die Stromkollektoren 4a, 4b durch eine poröse Struktur gebildet, welche die Anode 1 bzw. die Kathode 2 tragen. Eine solche poröse Struktur kann entweder nur für die Anoden 1 oder nur für die Kathoden 2 oder sowohl für Anoden 1 als auch Kathoden 2 vorgesehen sein. In der die Stromkollektoren 4a, 4b bildenden porösen Struktur sind Strömungswege vorhanden, welche dazu dienen, das Brenngas bzw. das Kathodengas an den jeweiligen Elektroden 1, 2 vorbeizuführen und an diesen zu verteilen.

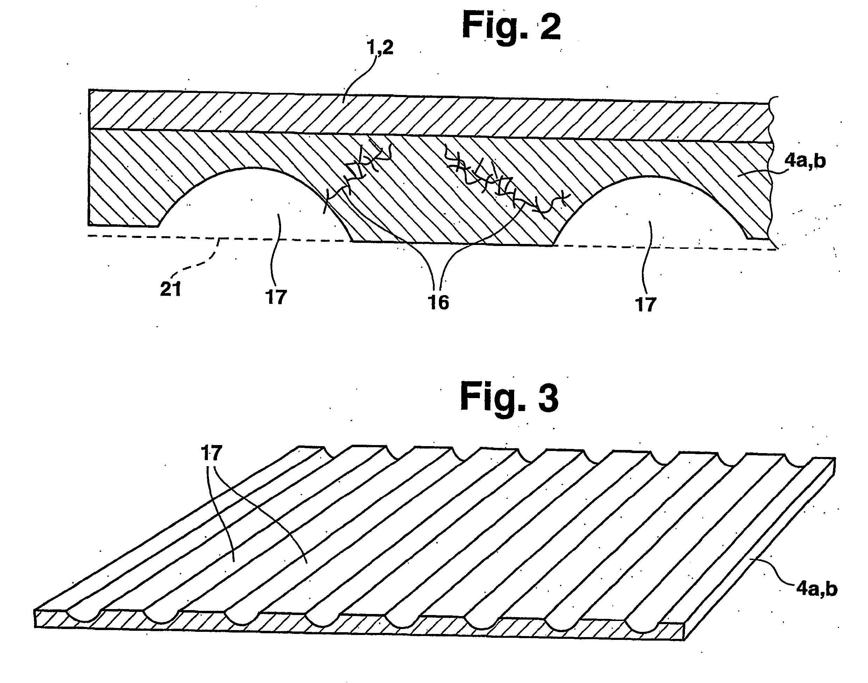

Wie in Figur 2, die eine vergrößerte Querschnittsdarstellung eines durch eine solche poröse Struktur gebildeten Stromkollektors 4a, 4b mit einer darauf aufgebrachten Elektrode 1, 2 zeigt, zu sehen ist, sind diese Strömungswege zum Führen von Brenngas bzw. Kathodengas zum einen durch (mikroskopische) Strömungswege 16 gebildet, die auf Grund der Porösität im Inneren der porösen Struktur vorhanden sind, sowie durch (makroskopische) Gaskanäle 17, die in oder an der porösen Struktur geschaffen sind. Bei dem in Figur 2 dargestellten Ausführungsbeispiel sind solche Kanäle 17 an der der jeweiligen Elektrode 1, 2 abgewandten Oberfläche der die Stromkollektoren 4a, 4b bildenden porösen Struktur vorgesehen.

Figur 3 zeigt eine perspektivische Darstellung eines Stromkollektors 4a, 4b, aus welcher der Verlauf der Kanäle 17 an der Oberfläche der porösen Struktur ersichtlich ist.

Die poröse Struktur, welche die Stromkollektoren 4a, 4b bildet, ist vorzugsweise aus einem Sintermaterial hergestellt, vorzugsweise aus einem porösen Nickel-Sintermaterial. Ein solches poröses Nickel-Sintermaterial wird bei dem hier beschriebenen Ausführungsbeispiel verwirklicht durch ein Nickel-Schaum-Material mit einem Feststoffgehalt von 4% bis ca. 35%. Die Oberfläche der porösen Struktur 4a, 4b, sowohl die der Elektrode 1, 2 zugewandte Oberfläche wie auch die dieser abgewandte Oberfläche ist bei dem dargestellten Ausführungsbeispiel eben, so dass die poröse Struktur eine planparallele Platte bildet, mit Ausnahme der in die der Elektrode 1, 2 abgewandten Oberfläche eingearbeiteten Strömungskanäle 17.

Die die Stromkollektoren 4a, bzw. 4b bildende poröse Struktur kann durch ein Karbonyl-Verfahren, Abscheiden, Galvanisieren oder Aufschäumen hergestellt werden. Nickel kann mittels galvanischem, chemischem, PVD- und CVD-Verfahren auf einem geformten organischen Vorläuferschaum abgeschieden werden. Beim Karbonyl-Verfahren erfolgt die Abscheidung nach dem Mondprozess. Beim Aufschäumen werden Metallpulversuspensionen verwendet.

Wie Figur 2 weiterhin zeigt, sind die Elektroden 1, 2, also die Anode 1 oder die Kathode 2, als Schicht auf der die Stromkollektoren 4a bzw. 4b bildenden porösen Struktur vorgesehen. Auf der die Kanäle 17 enthaltenden Oberfläche der porösen Stromkollektorstruktur kann eine Abschlussfolie 21 vorgesehen sein, welche die Kanäle 17 bündig mit der Oberfläche der porösen Struktur abschließt.

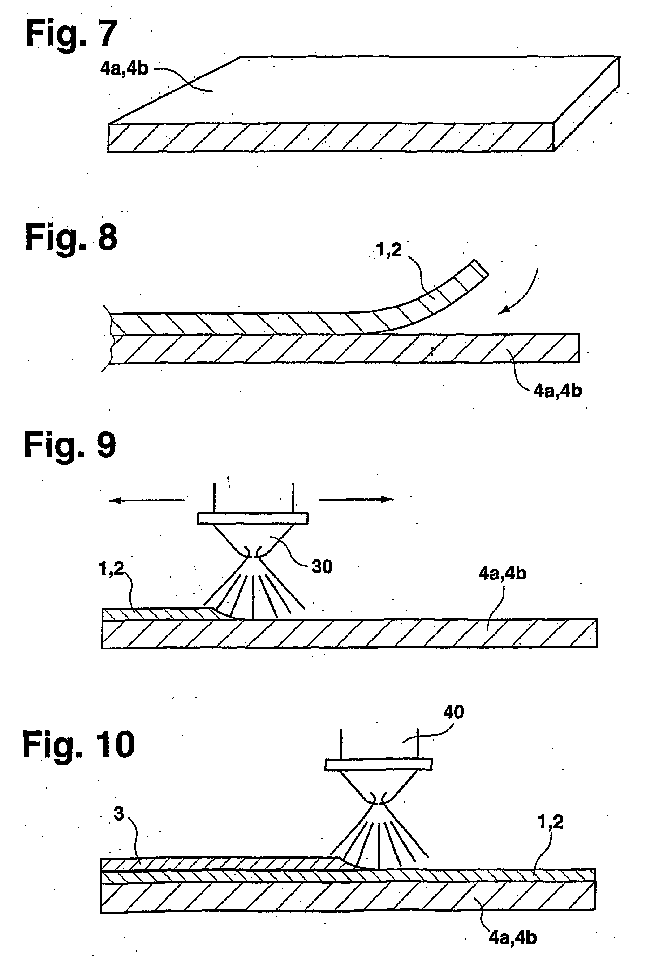

Die Herstellung der Elektroden 1, 2 bzw. der diese bildenden Schicht kann allgemein auf sehr unterschiedliche Weise erfolgen, was unter Bezugnahme auf die Figuren 7, 8 und 9 beschrieben werden soll. Ausgangspunkt der Herstellung der Elektroden ist die die Stromkollektoren 4a, 4b bildende poröse Struktur, wie in Figur 7 gezeigt ist.

Auf diese die Stromkollektoren 4a, 4b bildende poröse Struktur wird die die Elektroden 1, 2 bildende Schicht aufgebracht, wie ganz allgemein in Figur 8 gezeigt ist. Grundsätzlich können sämtliche aktiven, gesprühten oder beschichteten Schichten auf den benachbarten Komponenten erzeugt werden. So kann beispielsweise die Anode und/oder die Kathode direkt auf die Matrix gesprüht werden.

Bei dem in Figur 9 gezeigten Ausführungsbeispiel wird die die Elektroden 1, 2 bildende Schicht durch Sprühen eines sprühfähigen, d.h. flüssigen, zähflüssigen oder pastösen Elektrodenmaterials auf die die Stromkollektoren 4a, 4b bildende poröse Struktur aufgebracht.

Alternativ dazu kann die die Elektroden 1, 2 bildende Schicht auch durch Rakeln eines zähflüssigen, pastösen oder plastischen Elektrodenrohmaterials auf die poröse Struktur der Stromkollektoren 4a, 4b aufgebracht werden.

Gemäß einer weiteren Alternative kann die die Elektroden 1, 2 bildende Schicht auch durch Gießen, Foliengießen oder Tauchen eines flüssigen Elektrodenrohmaterials auf die die Stromkollektoren 4a, 4b bildende poröse Struktur aufgebracht werden.

Gemäß einer weiteren Alternative kann die die Elektroden 1, 2 bildende Schicht zunächst getrennt hergestellt und dann auf die die Stromkollektoren 4a, 4b bildende poröse Struktur aufgebracht werden, ähnlich wie es in der allgemeinen Darstellung der Figur 8 gezeigt ist.

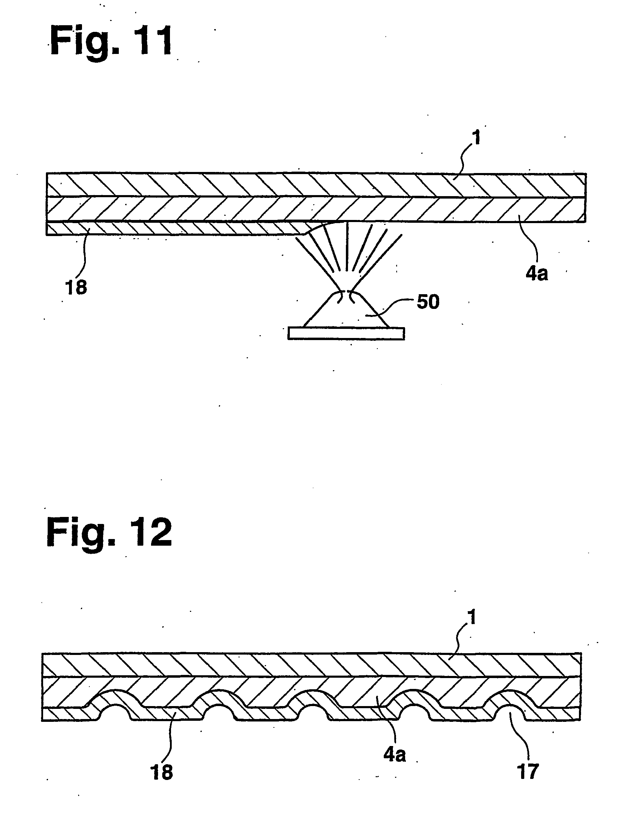

Wie Figur 11 zeigt, wird gemäß einem weiteren Ausführungsbeispiel der Erfindung auf der den Stromkollektor 4a der Anode 1 bildenden porösen Struktur eine Schicht 18 eines Katalysatormaterials aufgebracht, welches der internen Reformierung des Brenngases innerhalb des Brennstoffzellenstapels unmittelbar vor dem Erreichen der Anode 1 dient. Dieses Katalysatormaterial 18 wird bei dem gezeigten Ausführungsbeispiel in Form einer Schicht mittels eines Sprühkopfs 50 aufgetragen.

Gemäß einem weiteren, in Figur 10 dargestellten Ausführungsbeispiel der Erfindung wird die Elektrolytmatrix 3 in Form einer Schicht auf der die Anoden 1 oder die Kathoden 2 bildenden Schicht hergestellt. Dies kann durch Aufbringen einer Schicht eines flüssigen, zähflüssigen, pastösen oder plastischen Elektrolytmaterials erfolgen. Bei dem in Figur 10 dargestellten Ausführungsbeispiel erfolgt das Aufbringen der Schicht des Elektrolytmaterials durch Sprühen desselben Mittels eines Sprühkopfs 40. Alternativ dazu kann das Aufbringen der die Matrix 3 bildenden Schicht durch Rakeln, Gießen, Foliengießen oder Tauchen erfolgen. Gemäß einer anderen Alternative kann die Matrix 3 als Schicht eines Elektrolytmaterials zunächst getrennt hergestellt und dann auf die die Anoden 1 oder Kathoden 2 bildenden Schicht aufgebracht werden. Vorzugsweise wird die Matrix 3 auf die Kathoden 2 aufgebracht.

Gemäß einer anderen Variante kann die Matrix 3 in Form einer Doppelschichtmatrix aus zwei Schichten hergestellt werden.

Die Kanäle 17, welche die (makroskopischen) Strömungswege zur Zuführung des Brenngases zu den Anoden 1 bzw. zur Zuführung des Oxidationsgases zu den Kathoden 2 bilden, werden gemäß dem in Figur 12 gezeigten Ausführungsbeispiel (welches sich auf die Ausbildung der Kanäle 17 an dem die Anode 1 tragenden Stromkollektor 4a bezieht), an der der Elektrode abgewandten Oberfläche der porösen Struktur ausgebildet.

Die Kanäle 17 werden durch Prägen, Walzen oder Pressen nachträglich an der porösen Struktur hergestellt.

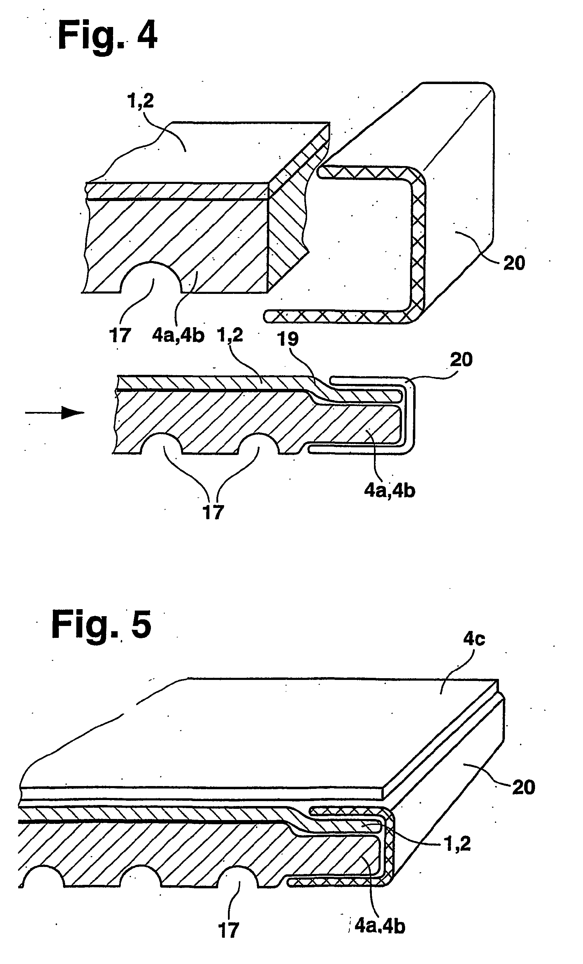

Wie die Figuren 4a) und b) sowie Figur 5 zeigen, sind gemäß einem weiteren Ausführungsbeispiel der Erfindung an der durch die Anode 1 oder die Kathode 2 und den diese tragenden Stromkollektor 4a, 4b gebildete Halbzelle seitlich Dichtungselemente 20 vorgesehen, welche einer seitlichen Abdichtung der besagten Halbzellen gegen ein Austreten von Brenngas bzw. Kathodengas dienen. Bei dem dargestellten Ausführungsbeispiel sind diese Dichtungselemente 20 durch U-förmige Profile gebildet, welche um die jeweilige Halbzelle herumgeführt sind.

Wie die Darstellung in Figur 4b) zeigt, sind an der Oberfläche von Anode 1 bzw. Kathode 2 und des diese tragenden Stromkollektors 4a bzw. 4b ein der Materialstärke des U-förmigen Dichtungselements 20 entsprechender Absatz 19 ausgebildet, so dass die Oberfläche von Anode 1 bzw. Kathode 2 und Stromkollektor 4a, 4b wie auch die gegenüberliegende Oberfläche des Stromkollektors 4a, 4b durch das Dichtungselement 20 glatt fortgesetzt wird, wodurch eine Anordnung der Halbzellen innerhalb des Brennstoffzellenstapels mit einer gleichmäßigen Vorspannung gewährleistet wird, vergleiche auch Figur 5.

Gemäß dem in Figur 5 gezeigten Ausführungsbeispiel sind die Bipolarbleche 4c durch ebene Bleche gebildet, welche eben auf dem Stromkollektor 4a bzw. 4b aufliegen.

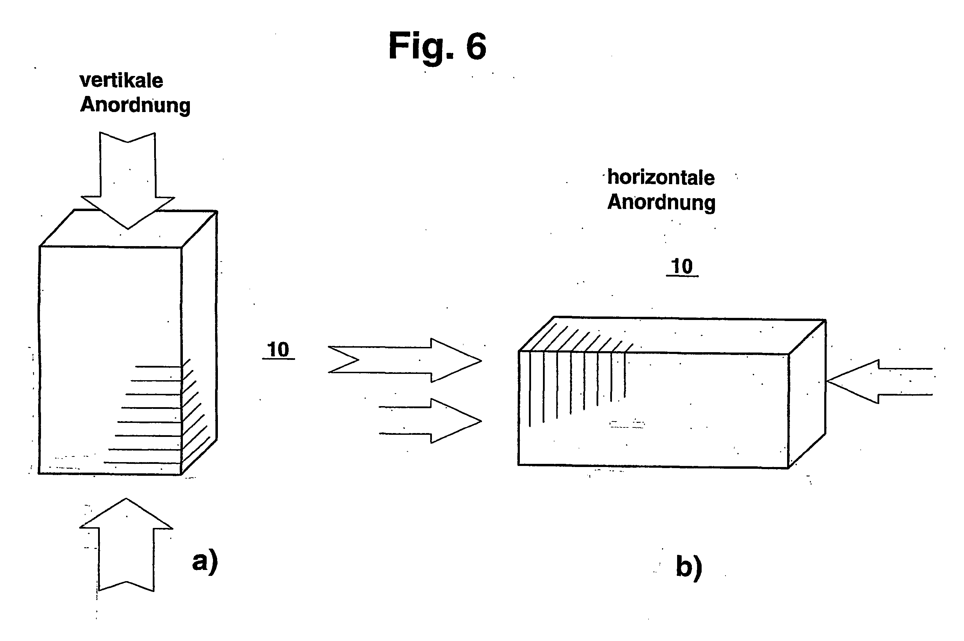

Gemäß einem weiteren Ausführungsbeispiel wird der Brennstoffzellenstapel 10 im Betrieb horizontal angeordnet, wie es in Figur 6b) gezeigt ist. Dies bedeutet, dass alle Brennstoffzellen einer gleichmäßigen Vorspannung und Belastung unterliegen, wodurch die Vorspannung und damit die Belastung der einzelnen Brennstoffzellen gleichmäßig und gering gehalten wird. Hierdurch wird eine Beschädigung der einzelnen Komponenten der Brennstoffzellen und insbesondere der die Stromkollektoren 4a, 4b bildenden porösen Struktur vermieden. Im Vergleich dazu werden in einer Brennstoffzellenanordnung mit einem vertikal angeordneten Brennstoffzellenstapel 10, wie er in Figur 6a) gezeigt ist die unteren Zellen zusätzlich zu der Vorspannung durch das Eigengewicht der oberen belastet und damit wesentlich stärker unter Druck gesetzt als es den darin enthaltenen Komponenten zuträglich ist. Vorzugsweise ist die Vorspannkraft der Brennstoffzellen 12 innerhalb des Brennstoffzellenstapels 10 gering und an den Betriebszustand der Brennstoffzellenanordnung variabel anpassbar. Ganz allgemein sind hierfür die Vorspannkraft erzeugende Mittel vorgesehen, die beim Anfahren der Brennstoffzellenanordnung bei deren in Betriebnahme eine hohe Vorspannkraft erzeugen und anschließend die Vorspannkraft reduzieren. Dadurch können beim Anfahren der Brennstoffzellenanordnung Toleranzen ausgeglichen werden, während beim nachfolgenden Betrieb der Brennstoffzellenanordnung eine Verringerung des Kriechens der Komponenten der einzelnen Brennstoffzellen 12 durch eine verringerte Vorspannung erreicht wird. Dies hat zum einen eine Reduzierung lebensdauerbegrenzender Effekte zur Folge und ermöglicht zum anderen die Verwendung z. B. der beschriebenen porösen Struktur für die Stromkollektoren 4a, 4b, ohne dass deren Lebensdauer durch eine hohe Dauerbelastung beeinträchtigt würde.

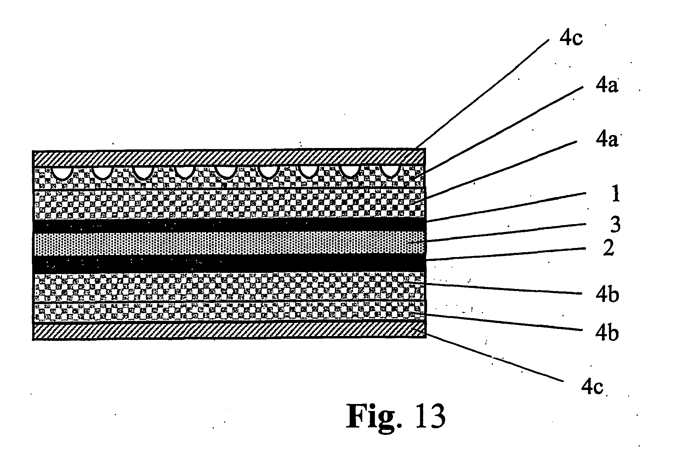

Bei der in Figur 13 dargestellten Zelle sind die Stromkollektoren 4a auf der Seite der Anode 1 bzw. 4b auf der Seite der Kathode 2 jeweils zweilagig ausgeführt. Die äußerste Lage, die jeweils an ein Bipolarblech 4c angrenzt, beinhaltet Strömungswege 17, die in die Schaumstruktur des Stromkollektors 4a bzw. 4b eingeprägt sind. Der Feststoffgehalt der Schaumstruktur kann zwischen 4 und 75 % variieren. Die die Strömungswege beinhaltende äußere Lage hat vorzugsweise größere mittlere Porengrößen (0,3 bis 1,2 mm) als die den Elektroden zugewandte Lagen mit mittleren Porengrößen zwischen 0,1 und 0,7 mm. Die Wahl der Porengröße (freier Durchmesser der Poren) und des Feststoffgehalts kann an die Erfordernisse der jeweiligen Seite angepasst werden. Größere Poren sind auf der gasführenden Seite günstiger, weil beim Einpressen der Strömungswege eine zu starke Verdichtung der Schaumstruktur unterhalb der Strömungswege vermieden wird und damit der Strömungswiderstand für die Gase klein bleibt. Kleine Poren auf der Elektrodenseite haben eine günstige Wirkung beim Aufsprühen des Schlickers: Kleine Porengrößen vermindern das Einsinken des Schlickers und bewirken dünnere Schichten. Kleinere Poren haben im weiteren eine verbesserte mechanische Unterstützung der aktiven Komponenten. Weiterhin ist von Vorteil, dass zwischen den Lagen noch zusätzliche Schichten mit Katalysatormaterial eingebracht werden können. Die Porengrößen beeinflussen nicht zuletzt auch die Herstellungskosten. Mit zweilagigen Stromkollektoren kann so eine optimierte Struktur dargestellt werden, während im Vergleich dazu einlagige Strukturen einen Kompromiss darstellen müssen.

### Bezugszeichenliste

- 1: Anode
- 2: Kathode
- 3: Elektrolytmatrix / ionenleitende Schicht
- 4a,b: Stromkollektor
- 4c: Bipolarblech
- 5: Zugstange
- 6: Endplatte
- 7: Endplatte
- 10: Brennstoffzellenstapel / Zellenstapel
- 12: Brennstoffzelle / Zelle
- 14: Gasverteiler
- 15: Gasverteilerdichtung
- 16: Strömungswege
- 17: Strömungswege
- 18: Katalysatorschicht
- 19: Absatz
- 20: Dichtungselement
- 21: Abschlussfolie
- 30: Sprühkopf
- 40: Sprühkopf
- 50: Sprühkopf
- 51: Balg
- B: Brenngas / Anodenmedium
- O: Oxidationsgas / Kathodenmedium

## Patentansprüche

1. Brennstoffzellenanordnung mit in Form eines Brennstoffzellenstapels (10) angeordneten Brennstoffzellen (12), die jeweils eine Anode (1), eine Kathode (2) und eine zwischen diesen angeordnete Elektrolytmatrix (3) aufweisen und durch Bipolarplatten (4) voneinander getrennt und elektrisch kontaktiert sind und die jeweils an den Anoden (1) Stromkollektoren (4a) zum elektrischen Kontaktieren derselben und zum Führen von Brenngas an denselben und an den Kathoden (2) Stromkollektoren (4b) zum elektrischen Kontaktieren derselben und zum Führen von Kathodengas an denselben aufweisen, und mit Mitteln (14, 15) zum Zuführen und Abführen von Brenngas und Kathodengas zu und von den Brennstoffzellen (12), wobei die Stromkollektoren (4a, 4b) von Anode (1) und/oder Kathode (2) durch eine gesinterte poröse Struktur gebildet sind, in welcher Poren als Strömungswege (16) zum Führen von Brenngas und/oder Kathodengas ausgebildet sind, wobei die poröse Struktur aus einem Schaum mit einem Feststoffgehalt von 4 % bis 35 % besteht, **dadurch gekennzeichnet, dass** in die gesinterte poröse Struktur durch Prägen, Walzen oder Pressen Kanäle als weitere Strömungswege (17) eingebracht sind und dass die das Brenngas und/oder Kathodengas führenden Strömungswege (17) an der der jeweiligen Elektrode (1, 2) abgewandten Oberfläche der die Stromkollektoren (4a, 4b) bildenden porösen Struktur vorgesehen sind.

2. Brennstoffzellenanordnung nach Anspruch 1, **dadurch gekennzeichnet, dass** die die Stromkollektoren (4a, 4b) bildende poröse Struktur aus einem porösen Nickel-Sintermaterial besteht.

3. Brennstoffzellenanordnung nach Anspruch 1 oder 2, **dadurch gekennzeichnet, dass** die die Stromkollektoren (4a, 4b) bildende poröse Struktur aus einem Nickel-Schaum-Material besteht.

4. Brennstoffzellenanordnung nach Anspruch 1, 2 oder 3, **dadurch gekennzeichnet, dass** die Oberfläche der porösen Struktur (4a, 4b) abgesehen von den Strömungswegen (17) eben ist.

5. Brennstoffzellenanordnung nach einem der Ansprüche 1 bis 4, **dadurch gekennzeichnet, dass** die Anode (1) und/oder Kathode (2) als Schicht auf der die Stromkollektoren (4a, 4b) bildenden porösen Struktur vorgesehen sind.

6. Brennstoffzellenanordnung nach einem der Ansprüche 1 bis 5, **dadurch gekennzeichnet, dass** die Bipolarplatten zwischen den Stromkollektoren (4a, 4b) benachbarter Brennstoffzellen (12) angeordnete ebene Bipolarbleche (4c) enthalten.

7. Brennstoffzellenanordnung nach einem der Ansprüche 1 bis 6, **dadurch gekennzeichnet, dass** die Elektrolytmatrix (3) als Schicht auf einer von Anode (1) oder Kathode (2) ausgebildet ist.

8. Brennstoffzellenanordnung nach einem der Ansprüche 1 bis 7, **dadurch gekennzeichnet, dass** auf der die Anode (1) tragenden, den Stromkollektor (4a) bildenden porösen Struktur eine Schicht (18) eines Katalysatormaterials vorgesehen ist.

9. Brennstoffzellenanordnung nach einem der Ansprüche 1 bis 8, **dadurch gekennzeichnet, dass** die durch Anode (1) oder Kathode (2) und den diese tragenden Stromkollektor (4a, 4b) gebildete Halbzelle seitlich durch ein Dichtungselement (20), insbesondere in Form eines U-förmigen Profils abgedichtet ist, welches um die Anode (1) oder Kathode (2) und die den Stromkollektor (4a, 4b) bildende poröse Struktur herumgeführt ist.

10. Brennstoffzellenanordnung nach Anspruch 9, **dadurch gekennzeichnet, dass** an der Oberfläche von Anode (1) bzw. Kathode (2) und des diese tragenden Stromkollektors (4a, 4b) ein der Materialstärke des Dichtungselements (20) entsprechender Absatz (19) ausgebildet ist, so dass die Oberfläche von Anode (1) bzw. Kathode (2) und Stromkollektor (4a, 4b) durch die Oberfläche des Dichtungselements (20) glatt fortgesetzt wird.

11. Brennstoffzellenanordnung nach einem der Ansprüche 1 bis 10, **dadurch gekennzeichnet, dass** der Brennstoffzellenstapel (10) im Betrieb horizontal angeordnet ist und dass die Vorspannkraft der Brennstoffzellen (12) gering und an den Betriebszustand der Brennstoffzellenanordnung variabel anpassbar ist.

12. Brennstoffzellenanordnung nach Anspruch 11, **dadurch gekennzeichnet, dass** die Vorspannkraft erzeugende Mittel beim Anfahren der Brennstoffzellenanordnung eine hohe Vorspannkraft erzeugen und anschließend die Vorspannkraft reduzieren.

13. Verfahren zum Herstellen einer Brennstoffzellenanordnung nach einem der Ansprüche 1 bis 12, **dadurch gekennzeichnet, dass** die Stromkollektoren (4a, 4b) als poröse Struktur aus einem Sintermaterial hergestellt werden, dass die weiteren Strömungswege (17) an der der jeweiligen Elektrode (1, 2) abgewandten Oberfläche der die Stromkollektoren (4a, 4b) bildenden Struktur durch Prägen, Walzen oder Pressen eingebracht werden, und dass die Elektroden (1, 2) als Schicht auf die Stromkollektoren (4a, 4b) aufgebracht werden.

14. Verfahren nach Anspruch 13, **dadurch gekennzeichnet, dass** die die Stromkollektoren (4a, 4b) bildende poröse Struktur aus einem Nickel-Schaum-Material hergestellt wird.

15. Verfahren nach Anspruch 13 oder 14, **dadurch gekennzeichnet, dass** die die Stromkollektoren (4a, 4b) bildende poröse Struktur durch ein Karbonyl-Verfahren, Abscheiden, Galvanisieren oder Aufschäumen hergestellt werden.

16. Verfahren nach Anspruch 13, 14 oder 15, **dadurch gekennzeichnet, dass** die die Elektroden (1, 2) bildende Schicht durch Sprühen eines sprühfähigen Elektrodenrohmaterials auf die die Stromkollektoren (4a, 4b) bildende poröse Struktur oder benachbarte Komponenten (Matrix) aufgebracht werden.

17. Verfahren nach Anspruch 13, 14 oder 15, **dadurch gekennzeichnet, dass** die die Elektroden (1, 2) bildende Schicht durch Rakeln eines zähflüssigen oder pastösen Elektrodenrohmaterials auf die die Stromkollektoren (4a, 4b) bildende poröse Struktur oder benachbarte Komponenten (Matrix) aufgebracht werden.

18. Verfahren nach Anspruch 13, 14 oder 15, **dadurch gekennzeichnet, dass** die die Elektroden (1, 2) bildende Schicht durch Gießen, Foliengießen oder Tauchen eines flüssigen Elektrodenrohmaterials auf die die Stromkollektoren (4a, 4b) bildende poröse Struktur oder benachbarte Komponenten (Matrix) aufgebracht werden.

19. Verfahren nach Anspruch 13, 14 oder 15, **dadurch gekennzeichnet, dass** die die Elektroden (1, 2) bildende Schicht zunächst getrennt hergestellt und dann auf die die Stromkollektoren (4a, 4b) bildende poröse Struktur oder benachbarte Komponenten (Matrix) aufgebracht wird.

20. Verfahren nach einem der Ansprüche 13 bis 19, **dadurch gekennzeichnet, dass** auf die die Anode (1) tragende, den Stromkollektor (4a) bildende poröse Struktur ein Katalysatormaterial (18) aufgebracht wird.

21. Verfahren nach Anspruch 20, **dadurch gekennzeichnet, dass** das Katalysatormaterial (18) in Form einer Schicht durch Sprühen aufgebracht wird.

22. Verfahren nach einem der Ansprüche 13 bis 21, **dadurch gekennzeichnet, dass** die Matrix (3) durch Aufbringen einer Schicht eines flüssigen, zähflüssigen, pastösen oder plastischen Elektrolytmaterials auf die die Anoden (1) oder Kathoden (2) bildende Schicht hergestellt wird.

23. Verfahren nach Anspruch 22, **dadurch gekennzeichnet, dass** die Matrix (3) durch Sprühen, Rakeln, Gießen, Foliengießen oder Tauchen hergestellt wird.

24. Verfahren nach einem der Ansprüche 13 bis 21, **dadurch gekennzeichnet, dass** die Matrix (3) als Schicht eines Elektrolytmaterials zunächst getrennt hergestellt und dann auf die die Anoden (1) oder Kathoden (2) bildende Schicht aufgebracht wird.

25. Verfahren nach Anspruch 22, 23 oder 24, **dadurch gekennzeichnet, dass** die Matrix (3) in Form einer Doppelschichtmatrix aus zwei Schichten hergestellt wird.

26. Verfahren nach einem der Ansprüche 22 bis 25, **dadurch gekennzeichnet, dass** die Matrix (3) auf die Kathoden (2) aufgebracht wird.

## Claims

1. Fuel cell arrangement having fuel cells (12) which are arranged in the form of a fuel cell stack (10), each have an anode (1), a cathode (2) and an electrolyte matrix (3) arranged between them and are isolated from one another and make electrical contact with one another by means of bipolar plates (4), and which, at the anodes (1), each have current collectors (4a) for making electrical contact therewith and for carrying fuel gas thereto and, at the cathodes (2), each have current collectors (4b) for making electrical contact therewith and for carrying cathode gas thereto, and having means (14, 15) for supplying and carrying away fuel gas and cathode gas to and from the fuel cells (12), with the current collectors (4a, 4b) of the anode (1) and/or of the cathode (2) being formed by a sintered porous structure in which pores are formed as flow paths (16) for carrying fuel gas and/or cathode gas, with the porous structure comprising a foam with a solids content of 4% to 35%, **characterized in that** channels are incorporated as further flow paths (17) in the sintered porous structure by stamping, rolling or pressing, and **in that** the flow paths (17) which carry the fuel gas and/or cathode gas are provided on that surface of the porous structure forming the current collectors (4a, 4b) which faces away from the respective electrode (1, 2).

2. Fuel cell arrangement according to Claim 1,
**characterized in that** the porous structure which forms the current collectors (4a, 4b) is composed of a porous nickel sintered material.

3. Fuel cell arrangement according to Claim 1 or 2, **characterized in that** the porous structure which forms the current collectors (4a, 4b) is composed of a nickel foam material.

4. Fuel cell arrangement according to Claim 1, 2 or 3, **characterized in that** the surface of the porous structure (4a, 4b) is flat, apart from the flow paths (17).

5. Fuel cell arrangement according to one of Claims 1 to 4, **characterized in that** the anode (1) and/or the cathode (2) are provided as a layer on the porous structure which forms the current collectors (4a, 4b).

6. Fuel cell arrangement according to one of Claims 1 to 5, **characterized in that** the bipolar plates contain flat bipolar sheets (4c) which are arranged between the current collectors (4a, 4b) of adjacent fuel cells (12).

7. Fuel cell arrangement according to one of Claims 1 to 6, **characterized in that** the electrolyte matrix (3) is in the form of a layer on one of the anode (1) or cathode (2).

8. Fuel cell arrangement according to one of Claims 1 to 7, **characterized in that** a layer (18) of a catalyst material is provided on the porous structure which supports the anode (1) and forms the current collector (4a).

9. Fuel cell arrangement according to one of Claims 1 to 8, **characterized in that** the half-cell which is formed by the anode (1) or cathode (2) and the current collector (4a, 4b) which supports it is sealed at the side by a sealing element (20), in particular in the form of a U-shaped profile, which is passed around the anode (1) or the cathode (2) and the porous structure which forms the current collector (4a, 4b).

10. Fuel cell arrangement according to Claim 9, **characterized in that** a step (19) which corresponds to the material thickness of the sealing element (20) is formed on the surface of the anode (1) and/or of the cathode (2) and of the current collector (4a, 4b) which supports it or them, such that the surface of the anode (1) and/or the cathode (2) and the current collector (4a, 4b) is continued smoothly on the surface of the sealing element (20).

11. Fuel cell arrangement according to one of Claims 1 to 10, **characterized in that** the fuel cell stack (10) is arranged horizontally in operation, and **in that** the prestressing force of the fuel cells (12) is low and can be variably matched to the operating state of the fuel cell arrangement.

12. Fuel cell arrangement according to Claim 11, **characterized in that** means which produce the prestressing force produce a high prestressing force when the fuel cell arrangement is being started, and then reduce the prestressing force.

13. Method for production of a fuel cell arrangement according to one of Claims 1 to 12, **characterized in that** the current collectors (4a, 4b) are produced as a porous structure composed of a sintered material, **in that** the further flow paths (17) are incorporated on that surface of the structure forming the current collectors (4a, 4b) which faces away from the respective electrode (1, 2) by stamping, rolling or pressing, and **in that** the electrodes (1, 2) are applied as a layer to the current collectors (4a, 4b).

14. Method according to Claim 13, **characterized in that** the porous structure which forms the current collectors (4a, 4b) is produced from a nickel foam material.

15. Method according to Claim 13 or 14, **characterized in that** the porous structure which forms the current collectors (4a, 4b) is produced by a carbonyl method, deposition, galvanization or foaming on.

16. Method according to Claim 13, 14 or 15, **characterized in that** the layer which forms the electrodes (1, 2) is applied by spraying an electrode raw material which can be sprayed onto the porous structure which forms the current collectors (4a, 4b), or onto adjacent components (matrix).

17. Method according to Claim 13, 14 or 15, **characterized in that** the layer which forms the electrodes (1, 2) is applied by wiping a viscous or pasty electrode raw material onto the porous structure which forms the current collectors (4a, 4b), or onto adjacent components (matrix).

18. Method according to Claim 13, 14 or 15, **characterized in that** the layer which forms the electrodes (1, 2) is applied by casting, film casting or dipping a liquid electrode raw material onto the porous structure which forms the current collectors (4a, 4b), or onto adjacent components (matrix).

19. Method according to Claim 13, 14 or 15, **characterized in that** the layer which forms the electrodes (1, 2) is first of all produced separately, and is then applied to the porous structure which forms the current collectors (4a, 4b), or to adjacent components (matrix).

20. Method according to one of Claims 13 to 19, **characterized in that** a catalyst material (18) is applied to the porous structure which supports the anode (1) and forms the current collector (4a).

21. Method according to Claim 20, **characterized in that** the catalyst material (18) is applied in the form of a layer by spraying.

22. Method according to one of Claims 13 to 21, **characterized in that** the matrix (3) is produced by application of a layer of a liquid, viscous, pasty or plastic electrolyte material to the layer which forms the anodes (1) or cathodes (2).

23. Method according to Claim 22, **characterized in that** the matrix (3) is produced by spraying, wiping, casting, film-casting or dipping.

24. Method according to one of Claims 13 to 21, **characterized in that** the matrix (3) is first of all produced separately as a layer of an electrolyte material, and is then applied to the layer which forms the anodes (1) or cathodes (2).

25. Method according to Claim 22, 23 or 24, **characterized in that** the matrix (3) is produced in the form of a double-layer matrix of two layers.

26. Method according to one of Claims 22 to 25, **characterized in that** the matrix (3) is applied to the cathodes (2).

## Revendications

1. Système de cellules à combustible qui présente des cellules à combustible (12) disposées en pile (10) de cellules à combustible, toutes dotées d'une anode (1) et d'une cathode (2) entre lesquelles est disposée une matrice d'électrolyte (3), séparées les unes des autres et mises en contact électrique par des plaques bipolaires (4), et toutes dotées sur les anodes (1) de collecteurs (4a) de courant qui assurent leur contact électrique et leur amènent du gaz combustible, et dotées sur les cathodes (2) de collecteurs (4b) de courant qui assurent leur contact électrique et leur amènent un gaz de cathode, ainsi que des moyens (14, 15) qui amènent le gaz combustible et le gaz cathode aux cellules à combustible (12) et en évacuent le gaz combustible et le gaz de cathode, les collecteurs (4a, 4b) des anodes (1) et/ou des cathodes (2) étant formés par une structure poreuse frittée dans laquelle des pores sont formés de manière à servir de parcours d'écoulement (16) qui amènent le gaz combustible et/ou le gaz de cathode, la structure poreuse étant constituée d'une mousse dont la teneur en solide est comprise entre 4 % et 35 %,
**caractérisé en ce que**
des canaux qui servent d'autres parcours d'écoulement (17) sont formés par gaufrage, laminage ou compression dans la structure poreuse frittée et **en ce que** les parcours d'écoulement (17) qui conduisent le gaz combustible et/ou le gaz cathode sont prévus sur la surface de la structure poreuse qui forme les collecteurs (4a, 4b) de courant qui n'est pas tournée vers l'électrode (1, 2) concernée.

2. Système de cellules à combustible selon la revendication 1, **caractérisé en ce que** la structure poreuse qui forme les collecteurs (4a, 4b) de courant est constituée d'un matériau poreux en nickel fritté.

3. Système de cellules à combustible selon les revendications 1 ou 2, **caractérisé en ce que** la structure poreuse qui forme les collecteurs (4a, 4b) de courant est constituée d'un matériau en mousse de nickel.

4. Système de cellules à combustible selon les revendications 1, 2 ou 3, **caractérisé en ce que** sauf pour les parcours d'écoulement (17), la surface de la structure poreuse (4a, 4b) est plane.

5. Système de cellules à combustible selon l'une des revendications 1 à 4, **caractérisé en ce que** l'anode (1) et/ou la cathode (2) sont prévues sous la forme d'une couche placée sur la structure poreuse qui forme les collecteurs (4a, 4b) de courant.

6. Système de cellules à combustible selon l'une des revendications 1 à 5, **caractérisé en ce que** les plaques bipolaires situées entre les collecteurs (4a, 4b) de courant de cellules à combustible (12) voisines contiennent des plaques bipolaires planes (4c).

7. Système de cellules à combustible selon l'une des revendications 1 à 6, **caractérisé en ce que** la matrice d'électrolyte (3) est configurée comme couche placée sur une anode (1) ou une cathode (2).

8. Système de cellules à combustible selon l'une des revendications 1 à 7, **caractérisé en ce qu'**une couche (18) d'un matériau catalyseur est prévue sur la structure poreuse qui porte l'anode (1) et qui forme le collecteur (4a) de courant.

9. Système de cellules à combustible selon l'une des revendications 1 à 8, **caractérisé en ce que** la demi-cellule formée par une anode (1) ou une cathode (2) et le collecteur (4a, 4b) de courant qui les porte est fermée hermétiquement sur un côté par un élément d'étanchéité (20) qui présente en particulier la forme d'un profilé en U qui est passé autour de l'anode (1) ou de la cathode (2) et de la structure poreuse qui forme le collecteur (4a, 4b) de courant.

10. Système de cellules à combustible selon la revendication 9, **caractérisé en ce qu'**une garniture (19) qui correspond à l'épaisseur du matériau de l'élément d'étanchéité (20) est formée sur la surface de l'anode (1) ou de la cathode (2) et du collecteur (4a, 4b) de courant qui les porte, de telle sorte que la surface de l'anode (1) ou de la cathode (2) et du collecteur (4a, 4b) de courant est prolongée sans gradin par la surface de l'élément d'étanchéité (20).

11. Système de cellules à combustible selon l'une des revendications 1 à 10, **caractérisé en ce qu'**en fonctionnement, la pile (10) de cellules à combustible est disposée à l'horizontale et **en ce que** la force de préserrage des cellules à combustibles (12) est réduite et peut être adaptée de manière variable à l'état de fonctionnement du système de cellules à combustible.

12. Système de cellules à combustible selon la revendication 11, **caractérisé en ce que** les moyens qui appliquent la force de préserrage exercent une haute force de serrage au démarrage du système de cellules à combustible et réduisent ensuite la force de préserrage.

13. Procédé de fabrication d'un système de cellules à combustible selon l'une des revendications 1 à 12, **caractérisé en ce que** les collecteurs (4a, 4b) de courant sont fabriqués sous la forme d'une structure poreuse en matériau fritté, **en ce que** les autres parcours d'écoulement (17) sont formés par gaufrage, laminage et compression sur la structure qui forme la surface des collecteurs (4a, 4b) de courant qui n'est pas tournée vers l'électrode (1, 2) concernée et **en ce que** les électrodes (1, 2) sont appliquées sous la forme d'une couche sur les collecteurs (4a, 4b) de courant.

14. Procédé selon la revendication 13, **caractérisé en ce que** la structure poreuse qui forme les collecteurs (4a, 4b) de courant est fabriquée en un matériau en mousse de nickel.

15. Procédé selon les revendications 13 ou 14, **caractérisé en ce que** la structure poreuse qui forme les collecteurs (4a, 4b) de courant sont fabriqués par un procédé au carbonyle, par dépôt, par galvanisation ou par moussage.

16. Procédé selon les revendications 13, 14 ou 15, **caractérisé en ce que** la couche qui forme les électrodes (1, 2) est réalisée par pulvérisation d'un matériau brut d'électrode pulvérisable sur la structure poreuse qui forme les collecteurs (4a, 4b) de courant ou sur des composants voisins (matrice).

17. Procédé selon les revendications 13, 14 ou 15, **caractérisé en ce que** la couche qui forme les électrodes (1, 2) est appliquée en raclant un matériau brut d'électrode fluide ou pâteux sur la structure poreuse qui forme les collecteurs (4a, 4b) de courant ou sur des composants voisins (matrice).

18. Procédé selon les revendications 13, 14 ou 15, **caractérisé en ce que** la couche qui forme les électrodes (1, 2) est formée par coulée, coulée en film ou versage d'un matériau brut d'électrode liquide sur la structure poreuse qui forme les collecteurs (4a, 4b) de courant ou sur les composants voisins (matrice).

19. Procédé selon les revendications 13, 14 ou 15, **caractérisé en ce que** la couche qui forme les électrodes (1, 2) est d'abord préparée séparément et est ensuite appliquée sur la structure poreuse qui forme les collecteurs (4a, 4b) de courant ou sur des composants voisins (matrice).

20. Procédé selon l'une des revendications 13 à 19, **caractérisé en ce qu'**un matériau de catalyseur (18) est appliqué sur la structure poreuse qui porte l'anode (1) et qui forme le collecteur (4a) de courant.

21. Procédé selon la revendication 20, **caractérisé en ce que** le matériau de catalyseur (18) est appliqué en couche par pulvérisation.

22. Procédé selon l'une des revendications 13 à 21, **caractérisé en ce que** la matrice (3) est réalisée par application d'une couche d'un matériau d'électrolyte liquide, fluide, pâteux ou plastique sur la couche qui forme les anodes (1) ou les cathodes (2).

23. Procédé selon la revendication 22, **caractérisé en ce que** la matrice (3) est réalisée par pulvérisation, raclage, coulée, coulée en film ou versage.

24. Procédé selon l'une des revendications 13 à 21, **caractérisé en ce que** la matrice (3) qui présente la forme d'une couche de matériau d'électrolyte est d'abord réalisée séparément et est ensuite appliquée sur la couche qui forme les anodes (1) ou les cathodes (2).

25. Procédé selon les revendications 22, 23 ou 24, **caractérisé en ce que** la matrice (3) est réalisée sous la forme d'une matrice en double couche constituée de deux couches.

26. Procédé selon l'une des revendications 22 à 25, **caractérisé en ce que** la matrice (3) est appliquée sur les cathodes (2).
